# EUROPEAN PATENT APPLICATION

(11) **EP 4 738 883 A1**
(43) Date of publication of application: **06.05.2026**
(21) Application number: 24941000.2
(22) Date of filing: 27.05.2024
(51) Int. Cl.: H04R 1/10

(54) **EARPHONE**

(71) Applicant: Shenzhen Shokz Co., Ltd., Shenzhen, Guangdong 518108 (CN)
(72) Inventor: NIE, Qianwen, Shenzhen, Guangdong 518108 (CN); LI, Chaowu, Shenzhen, Guangdong 518108 (CN); WANG, Chong, Shenzhen, Guangdong 518108 (CN); ZHANG, Xu, Shenzhen, Guangdong 518108 (CN)
(74) Representative: Gong, Jinping
(86) International application number: PCT/CN2024/095606
(87) International publication number: WO 2025/245679

(57) **Abstract**

The present disclosure relates to a headphone, and in particular, to the technical field of electronic devices. The headphone includes a main control circuit board and a capacitor electrode plate. The capacitor electrode plate is disposed in a region of the headphone that is close to a user's skin in a wearing state of the headphone. The capacitor electrode plate is configured to generate an electric signal based on whether the user wears the headphone. The capacitor electrode plate includes a first main portion electrically connected to the main control circuit board, a second main portion spaced apart from the first main portion, and a first connecting portion. The first connecting portion connects the first main portion and the second main portion in a spaced region between the first main portion and the second main portion. An area of the first connecting portion is smaller than an area of the first main portion and an area of the second main portion. The first connecting portion is bent relative to at least one of the first main portion and the second main portion, such that the first main portion and the second main portion are non-coplanar.

## Description

### TECHNICAL FIELD

The present disclosure generally relates to the field of electronic devices, and in particular to headphones.

### BACKGROUND

The wearing state detection function of the headphone is implemented by an infrared light sensor. The infrared light sensor needs to be kept on continuously, which results in relatively high-power consumption. Furthermore, the infrared light emits a small amount of radiation to the human body, and long-term use may pose a threat to human health.

### SUMMARY

An aspect of the present disclosure provides a headphone. The headphone includes a main control circuit board and a capacitor electrode plate. The capacitor electrode plate is disposed in a region of the headphone that is close to a user's skin in a wearing state of the headphone. The capacitor electrode plate is configured to generate an electric signal based on whether the user wears the headphone. The capacitor electrode plate includes a first main portion electrically connected to the main control circuit board, a second main portion spaced apart from the first main portion, and a first connecting portion. The first connecting portion connects the first main portion and the second main portion in a spaced region between the first main portion and the second main portion. An area of the first connecting portion is smaller than an area of the first main portion and an area of the second main portion. The first connecting portion is bent relative to at least one of the first main portion and the second main portion, such that the first main portion and the second main portion are non-coplanar.

In some embodiments, the capacitor electrode plate further includes a second connecting portion connected to the first main portion. An area of the second connecting portion is smaller than the area of the first main portion and the area of the second main portion. The first main portion, the second main portion, and the first connecting portion are located outside the main control circuit board. The first main portion, the second main portion, and the first connecting portion are electrically connected to the main control circuit board through the second connecting portion.

In some embodiments, the first main portion, the second main portion, the first connecting portion, and the second connecting portion are integrally formed from a plate or a sheet.

In some embodiments, the second connecting portion is bent relative to the first main portion.

In some embodiments, an area of the capacitor electrode plate is in a range of 35 mm²-50 mm².

In some embodiments, the headphone further includes a core housing and a hook-shaped structure connected to the core housing. The core housing has a connecting end connected to the hook-shaped structure and a free end not connected to the hook-shaped structure. The core housing is located at a front side of an ear of the user in the wearing state of the headphone. The free end extends into or covers a cavum concha. At least a portion of the hook-shaped structure is located at a rear side of the ear in the wearing state of the headphone. The capacitor electrode plate is disposed inside the core housing and close to the free end.

In some embodiments, the free end is arranged in a tapered shape along a direction away from the connecting end. The capacitor electrode plate further includes a second connecting portion connected to the first main portion. The capacitor electrode plate is electrically connected to the main control circuit board through the second connecting portion. The second connecting portion is closer to the free end than the first connecting portion. An area of the second connecting portion is smaller than the area of the first connecting portion.

In some embodiments, an inner wall surface of the free end has a first wall surface region and a second wall surface region that are non-coplanar. The first connecting portion is bent such that the first main portion is disposed adjacent to the first wall surface region. The second main portion is disposed adjacent to the second wall surface region.

In some embodiments, a degree of curvature of the first wall surface region is less than a degree of curvature of the second wall surface region. The first main portion is fixedly attached to the first wall surface region. At least a portion of the second main portion maintains a clearance fit with the second wall surface region.

In some embodiments, the area of the first connecting portion is smaller than the area of the first main portion and smaller than the area of the second main portion.

In some embodiments, the first connecting portion has a first side, a second side, a third side, and a fourth side sequentially connected end to end. The first side and the second side are oppositely disposed. The third side and the fourth side are oppositely disposed. The first side is connected to the first main portion. The second side is connected to the second main portion. A length of the first side and a length of the second side are both less than a length of the third side and both less than a length of the fourth side.

In some embodiments, the headphone further includes an electrode plate bracket. The electrode plate bracket is configured to support the first main portion such that the first main portion is fixedly attached to the first wall surface region.

In some embodiments, the headphone further includes a speaker disposed inside the core housing. Along an axial direction of the speaker, the main control circuit board overlaps a portion of the speaker close to the connecting end, and the capacitor electrode plate overlaps another portion of the speaker close to the free end.

In some embodiments, the headphone further includes a sound chamber bracket disposed around a periphery of the speaker. The second main portion is lapped on the sound chamber bracket.

In some embodiments, the headphone further includes an electrode plate bracket configured to support the first main portion. One end of the electrode plate bracket is relatively fixed to the main control circuit board. The other end of the electrode plate bracket is relatively fixed to the sound chamber bracket.

In some embodiments, the headphone further includes a reinforcement plate attached to the main control circuit board. One end of the electrode plate bracket is supported on the reinforcement plate. The other end of the electrode plate bracket is supported on the sound chamber bracket.

### BRIEF DESCRIPTION OF THE DRAWINGS

In order to more clearly illustrate the technical solutions in the embodiments of the present disclosure, the accompanying drawings that need to be used in the description of the embodiments will be briefly introduced in the following, and it will be obvious that the accompanying drawings in the following description are only some of the embodiments of the present disclosure, and other attachments can be obtained according to them without creative labor to a person of ordinary skill in the art.
FIG. 1 is a schematic diagram of a front side profile of an ear of a user or a simulator according to some embodiments of the present disclosure;
FIG. 2 is a schematic structural diagram of a headphone according to some embodiments of the present disclosure;
FIG. 3 is a schematic diagram of the headphone shown in FIG. 2 in a wearing state according to some embodiments of the present disclosure;
FIG. 4 is a schematic structural diagram of the headphone shown in FIG. 2 from another perspective according to some embodiments of the present disclosure;
FIG. 5 is a schematic structural diagram of the headphone shown in FIG. 2 from yet another perspective according to some embodiments of the present disclosure;
FIG. 6 is a cross-sectional view of the headphone in FIG. 2 taken along line VI-VI according to some embodiments of the present disclosure;
FIG. 7 is a cross-sectional view of the headphone in FIG. 2 taken along line VII-VII according to some embodiments of the present disclosure;
FIG. 8 is a schematic structural diagram of a first housing in FIG. 6 according to some embodiments of the present disclosure;
FIG. 9 is an exploded view of a second housing in FIG. 6 according to some embodiments of the present disclosure;
FIG. 10 is a partial schematic structural diagram of the headphone in FIG. 6 according to some embodiments of the present disclosure;
FIG. 11 is a partial schematic structural diagram of a sound chamber bracket in FIG. 6 according to some embodiments of the present disclosure;
FIG. 12 is a partial schematic structural diagram of the headphone in FIG. 6 according to some embodiments of the present disclosure; and
FIG. 13 is a schematic structural diagram of a capacitor electrode plate in FIG. 12 according to some embodiments of the present disclosure.

### DETAILED DESCRIPTION

The present disclosure is further described in detail below with reference to the accompanying drawings and embodiments. It is specifically pointed out that the following embodiments are only used to illustrate the present disclosure, but do not limit the scope of the present disclosure. Similarly, the following embodiments are only some embodiments of the present disclosure rather than all embodiments. All other embodiments obtained by a person of ordinary skill in the art based on the embodiments of the present disclosure without creative efforts shall fall within the protection scope of the present disclosure.

Mention of "embodiment" in the present disclosure means that a specific feature, structure, or characteristic described in connection with the embodiment can be included in at least one embodiment of the present disclosure. A person skilled in the art explicitly and implicitly understands that the embodiments described in the present disclosure can be combined with other embodiments.

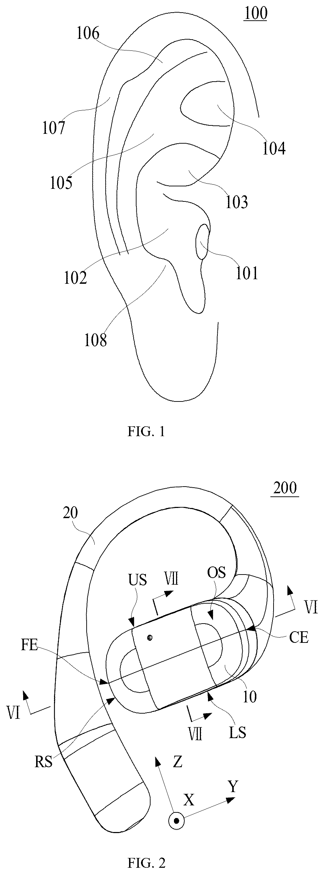

FIG. 1 is a schematic diagram of a front side profile of an ear of a user or a simulator according to some embodiments of the present disclosure. An ear 100 may include physiological parts such as an external auditory canal 101, a cavum concha 102, a cymba concha 103, a triangular fossa 104, an antihelix 105, a scaphoid fossa 106, a helix 107, and an antitragus 108. The external auditory canal 101 has a certain depth and may extend to the tympanic membrane. However, for ease of description, the external auditory canal 101 in the present disclosure specifically refers to an ear hole of the ear 100 unless otherwise specified. In addition, physiological parts such as the cavum concha 102, the cymba concha 103, and the triangular fossa 104 may also have a certain volume and depth. The cavum concha 102 can be directly connected to the external auditory canal 101. That is, the ear hole can be simply regarded as being located at the bottom of the cavum concha 102.

It should be understood that for users, there may be individual differences between different users, resulting in dimensional differences such as different shapes and sizes of the ear 100. For ease of description and to reduce (or even eliminate) individual differences of different users, a simulator including a head and ears 100 (generally including a left ear and a right ear, and the left ear is used as an example here) may be manufactured based on ANS: S3.36, S3.25 and IEC: 60318-7 standards, for example, GRAS 45BC KEMAR, HEAD Acoustics, B&K 4128 series, or B&K 5128 series, to present a scenario where most users wear a headphone through the simulator. Using GRAS KEMAR as an example, the simulator of the ear 100 may be any one of GRAS 45AC, GRAS 45BC, GRAS 45CC, or GRAS 43AG. Using HEAD Acoustics as an example, the simulator of the ear 100 may be any one of HMS II.3, HMS II.3 LN, or HMS II.3LN HEC.

It should be noted that in fields such as medicine and anatomy, three basic planes, namely, a sagittal plane, a coronal plane, and a horizontal plane, and three basic axes, namely, a sagittal axis, a coronal axis, and a vertical axis, may be defined for a human body or a human body simulator. The sagittal plane refers to a plane that is cut along the front-rear direction of the body and is perpendicular to the ground, and it divides the human body or the human body simulator into left and right parts. The coronal plane refers to a plane that is cut along the left-right direction of the body and is perpendicular to the ground, and it divides the human body or the human body simulator into front and rear parts. The horizontal plane refers to a plane that is parallel to the ground, and it divides the human body or the human body simulator into upper and lower parts. Correspondingly, the sagittal axis refers to an axis along the front-rear direction of the body and perpendicular to the coronal plane. The coronal axis refers to an axis along the left-right direction of the body and perpendicular to the sagittal plane. The vertical axis refers to an axis along the up-down direction of the body and perpendicular to the horizontal plane. Further, the "front side of the ear" described in the present disclosure is a concept relative to the "rear side of the ear". The former refers to a side of the ear facing away from the head, and the latter refers to a side of the ear facing the head. Both are for the ear 100 of the user or the simulator. The ear 100 of the human body or the human body simulator may be observed along the direction of the coronal axis, as shown in FIG. 1.

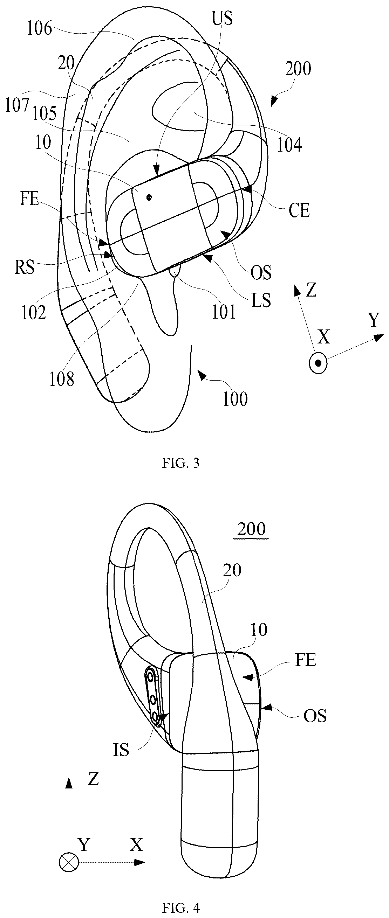

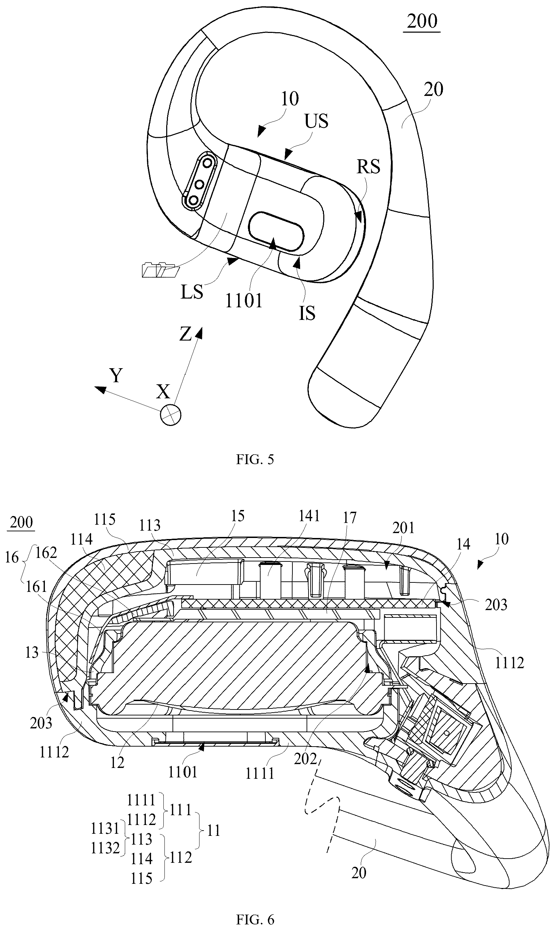

Referring to FIG. 2, FIG. 3, FIG. 4, and FIG. 5, FIG. 2 is a schematic structural diagram of a headphone according to some embodiments of the present disclosure. FIG. 3 is a schematic diagram of the headphone shown in FIG. 2 in a wearing state according to some embodiments of the present disclosure. FIG. 4 is a schematic structural diagram of the headphone shown in FIG. 2 from another perspective according to some embodiments of the present disclosure. FIG. 5 is a schematic structural diagram of the headphone shown in FIG. 2 from yet another perspective according to some embodiments. The headphone 200 may include a core module 10 and a hook-shaped structure 20 connected to the core module 10. The core module 10 may be located at the front side of the ear 100 in the wearing state of the headphone. At least a portion of the hook-shaped structure 20 is located at the rear side of the ear 100 in the wearing state of the headphone, so that the headphone 200 is hung on the ear 100 in the wearing state of the headphone.

In the present disclosure, descriptions such as "wearing the headphone 200," "the headphone 200 is in the wearing state," "in the wearing state of the headphone 100," and "in the wearing state" when describing the process or action of wearing the headphone 200 can all refer to the headphone 200 being worn on the ear 100. Certainly, precisely because different users have individual differences, there may be certain differences when the headphone 200 is worn by different users compared to when the headphone 200 is worn on the ear 100 of the simulator. However, such differences should be tolerated.

In some embodiments, the core module 10 may have a connecting end CE connected to the hook-shaped structure 20 and a free end FE not connected to the hook-shaped structure 20. The core module 10 may be configured not to block the external auditory canal 101 in the wearing state, so that the headphone 200 serves as an "open headphone." It should be understood that due to individual differences of different users, when the headphone 200 is worn by different users, the core module 10 may partially cover the external auditory canal 101, but the external auditory canal 101 is still not blocked.

Specifically, to improve the stability of the headphone 200 in the wearing state, the headphone 200 may adopt any one of the following manners or a combination thereof. In the first manner, at least a portion of the hook-shaped structure 20 may be configured as a profiling structure that fits against at least one of the rear side of the ear 100 and the head, to increase a contact area between the hook-shaped structure 20 and the ear 100 and/or the head, thereby increasing the resistance against the headphone 200 falling off the ear 100. In the second manner, at least a portion of the hook-shaped structure 20 is configured as an elastic structure, so that it has a certain amount of deformation in the wearing state, to increase the positive pressure of the hook-shaped structure 20 on the ear 100 and/or the head, thereby increasing the resistance against the headphone 200 falling off the ear 100. In the third manner, at least a portion of the hook-shaped structure 20 is configured to abut against the head in the wearing state, so that it forms a reaction force pressing against the ear 100, to cause the core module 10 to press against the front side of the ear 100, thereby increasing the resistance against the headphone 200 falling off the ear 100. In the fourth manner, the core module 10 and the hook-shaped structure 20 are configured to clamp physiological parts such as a region where the antihelix 105 is located and a region where the cavum concha 102 is located from the front and rear sides of the ear 100 in the wearing state, thereby increasing the resistance against the headphone 200 falling off the ear 100. In the fifth manner, the core module 10 or an auxiliary structure connected to the core module 10 is configured to extend at least partially into physiological parts such as the cavum concha 102, the cymba concha 103, the triangular fossa 104, and the scaphoid fossa 106, thereby increasing the resistance against the headphone 200 falling off the ear 100.

Optionally, referring to FIG. 3, in the wearing state, the free end FE of the core module 10 may extend at least partially into the cavum concha 102. The core module 10 and the hook-shaped structure 20 may be configured to jointly clamp the ear 100 from the front and rear sides of a region of the ear 100 corresponding to the cavum concha 102, thereby increasing the resistance against the headphone 200 falling off the ear 100, and thus improving the stability of the headphone 200 in the wearing state. For example, the free end FE may abut against the inside of the cavum concha 102 in a thickness direction X. As another example, the free end FE may abut against the inside of the cavum concha 102 in a length direction Y and a width direction Z.

It should be noted that in the wearing state, in addition to extending into the cavum concha 102, the free end FE of the core module 10 may also have an orthographic projection falling on the antihelix 105, or may have an orthographic projection falling on left and right sides of the head and located at a position on the front side of the ear 100 on the sagittal axis. In other words, the hook-shaped structure 20 may support the core module 10 to be worn in wearing positions such as the cavum concha 102, the antihelix 105, and the front side of the ear 100.

Optionally, referring to FIG. 3, FIG. 4, and FIG. 5, in the wearing state and when observed along the direction of the coronal axis, the core module 10 may be configured in shapes such as a circle, an ellipse, a rounded square, or a rounded rectangle. The core module 10 may have a length direction Y and a width direction Z that are perpendicular to the thickness direction X and orthogonal to each other. The length direction Y may be defined as a direction in which the core module 10 is close to or away from the back of the head in the wearing state. The width direction Z may be defined as a direction in which the core module 10 is close to or away from the top of the head in the wearing state. Therefore, for ease of description, this embodiment uses the core module 10 configured as a rounded rectangle as an example for illustrative description. In some embodiments, a length of the core module 10 in the length direction Y may be greater than a width of the core module 10 in the width direction Z.

Optionally, the core module 10 may have an inner side surface IS facing the ear 100 along the thickness direction X in the wearing state, an outer side surface OS facing away from the ear 100, and connecting surfaces connecting the inner side surface IS and the outer side surface OS, for example, a lower side surface LS, an upper side surface US, and a rear side surface RS. In the wearing state of the core module 10, the upper side surface US connects the inner side surface IS and the outer side surface OS and extends in the width direction Z away from the external auditory canal 101. The lower side surface LS connects the inner side surface IS and the outer side surface OS and faces the external auditory canal 101. The rear side surface RS connects the upper side surface US and the lower side surface LS, and may also connect the inner side surface IS and the outer side surface OS. The thickness direction X may also be defined as a direction in which the core module 10 is close to or away from the ear 100 in the wearing state. At least a portion of the connecting surface, for example, the rear side surface RS, may be located in the cavum concha 102 in the wearing state and forms a first contact region with the front side of a region of the ear 100. That is, the rear side surface RS may be located at an end facing the back of the head in the length direction Y in the wearing state, and at least a portion of the rear side surface RS is located within the cavum concha 102. In some embodiments, the hook-shaped structure 20 forms a second contact region with a rear side of the region of the ear 100 in the wearing state. The second contact region and the first contact region at least partially overlap in a thickness direction of the region of the ear 100. Further, the core module 10 and the hook-shaped structure 20 may jointly clamp the ear 100 from the front and rear sides of the ear 100. The clamping force is mainly compressive stress, which is beneficial for improving the stability and comfort of the headphone 200 in the wearing state. In some embodiments, when the core module 10 is configured as a circle, an ellipse, or the like, the connecting surfaces may also refer to arc-shaped side surfaces of the core module 10.

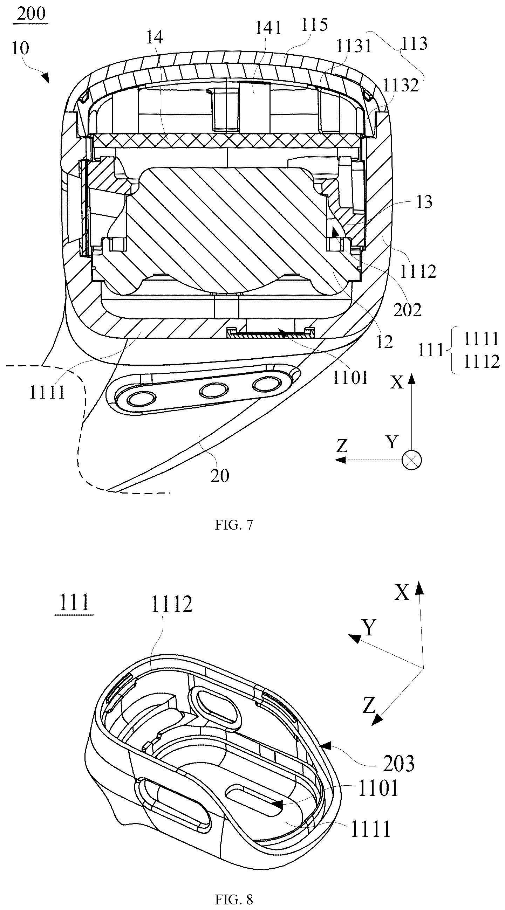

Optionally, referring to FIG. 6 and FIG. 7, FIG. 6 is a cross-sectional view of the headphone in FIG. 2 taken along line VI-VI according to some embodiments of the present disclosure. FIG. 7 is a cross-sectional view of the headphone in FIG. 2 taken along line VII-VII according to some embodiments of the present disclosure. The core module 10 may include a core housing 11, a speaker 12, a sound chamber bracket 13, a main control circuit board 14, a microphone 15, and a sensor 16. The core housing 11 may be connected to the hook-shaped structure 20. The core housing 11 may have a mounting space 201 for mounting the speaker 12, the sound chamber bracket 13, the main control circuit board 14, the microphone 15, the sensor 16, etc. The mounting space 201 may also be used to mount other structures, e.g., a battery, etc., which are not described in detail. The speaker 12, the sound chamber bracket 13, the main control circuit board 14, the microphone 15, and the sensor 16 may all be disposed in the core housing 11, e.g., in the mounting space 201. The speaker 12 and the sound chamber bracket 13 may enclose to form an acoustic cavity 202. The main control circuit board 14 may be electrically connected to the speaker 12, the microphone 15, and the sensor 16. The main control circuit board 14 may be configured to control the operation of the speaker 12 and/or the microphone 15. The main control circuit board 14 may be configured to receive an electric signal generated by the sensor 16. The main control circuit board 14 may be configured to generate a corresponding control instruction based on the electric signal, allowing the headphone 200 to implement a preset function. The acoustic cavity 202 may be located in the mounting space 201.

Optionally, referring to FIG. 6 and FIG. 7, the core housing 11 may include a first housing 111 and a second housing 112 that are fastened together along the thickness direction X to form the mounting space 201. The second housing 112 is closer to the ear 100 than the first housing 111 in the wearing state. A parting surface 203 is provided between the first housing 111 and the second housing 112 to simplify the structure of the core housing 11 and reduce processing costs. The second housing 112 is closer to the ear 100 than the first housing 111 in the wearing state.

Preferably, referring to FIG. 6, FIG. 7, and FIG. 8, FIG. 8 is a schematic structural diagram of a first housing in FIG. 6 according to some embodiments of the present disclosure. In some embodiments, the first housing 111 may be a plastic component or may be a housing structure made of other materials. The first housing 111 may include a bottom wall 1111 and a first side wall 1112 connected to the bottom wall 1111 and extending toward a side close to the second housing 112. When the headphone 200 is worn, the bottom wall 1111 may face the skin at the ear 100, and a partial region thereof may contact the skin.

Preferably, a sound outlet hole 1101 communicating with the mounting space 201 may be provided on the bottom wall 1111. The sound outlet hole 1101 may cooperate with the speaker 12, allowing sound waves generated by the speaker 12 to propagate through the sound outlet hole 1101. In some embodiments, the sound outlet hole 1101 is not provided on the bottom wall 1111, but may be provided on a side of the first side wall 1112 corresponding to the lower side surface LS, or may be provided at a corner between the first side wall 1112 and the bottom wall 1111. In some embodiments, the sound outlet hole 1101 does not communicate with the acoustic cavity 202. In some embodiments, an acoustic resistance mesh and/or a protective steel mesh, etc., may be provided at the sound outlet hole 1101 on the bottom wall 1111.

The first side wall 1112 may extend from an edge of the bottom wall 1111 toward a side close to the second housing 112. The first side wall 1112 and the bottom wall 1111 may be an integrally formed structural member for ease of processing, or the first side wall 1112 and the bottom wall 1111 may not be integrally formed. In some embodiments, observed along the width direction Z, and in a reference direction from the connecting end CE toward the free end FE, a portion of the first side wall 1112 close to the free end FE gradually approaches the bottom wall 1111 in the thickness direction X.

Preferably, in some embodiments, the first side wall 1112 may be used to dispose the sensor 16, i.e., the sensor 16 may be disposed on the first side wall 1112.

It is worth noting that when the core module 10 is configured as a rounded square, a rounded rectangle, or the like, the sensor 16 may be at least partially located on the upper side surface US or on a surface of the upper side surface US close to the rear side surface RS. Alternatively, the sensor 16 may be at least partially located on the lower side surface LS or on a surface of the upper side surface US close to the rear side surface RS. Alternatively, the sensor 16 may be disposed opposite to the rear side surface RS in the length direction Y.

In some embodiments, when the sensor 16 is disposed on the surface of the lower side surface LS close to the rear side surface RS or on the surface of the upper side surface US close to the rear side surface RS, the free end FE extends into the cavum concha 102 in the wearing state and is more likely to trigger the sensor 16, which is beneficial for improving user experience satisfaction with the headphone 200.

Referring to FIG. 6, FIG. 7, and FIG. 9, FIG. 9 is an exploded view of a second housing in FIG. 6 according to some embodiments of the present disclosure. The second housing 112 may include a core inner housing 113, a flexible embedded block 114, and a flexible covering layer 115. The core inner housing 113 engages with the first housing 111 (e.g., the first side wall 1112) along the thickness direction X to form the mounting space 201. The flexible embedded block 114 is disposed on the core inner housing 113 and located outside the mounting space 201. The flexible covering layer 115 is disposed on the core inner housing 113 and located outside the mounting space 201. The flexible embedded block 114 is at least partially clamped between the core inner housing 113 and the flexible covering layer 115.

The core inner housing 113 may be a plastic component or may be a housing structure made of other materials. The parting surface 203 between the core inner housing 113 and the first housing 111 (e.g., the first side wall 1112) is inclined toward a side where the first housing 111 is located in a direction toward the free end FE. In some scenarios, observed along the width direction Z, a portion of the core inner housing 113 close to the free end FE is inclined toward a side close to the first housing 111 (e.g., the first side wall 1112). A portion of the first housing 111 (e.g., the first side wall 1112) close to the free end FE gradually moves away from the core inner housing 113 in the thickness direction X. This allows the first housing 111 and the core inner housing 113 to match at the parting surface 203 and achieve engagement. In some scenarios, the core inner housing 113 is inclined toward the side close to the first housing 111 (e.g., the first side wall 1112) which achieves a recess and leaves a space for disposing the flexible embedded block 114, so as to reduce the impact of the flexible embedded block 114 on the appearance of the second housing 112 while minimizing the mounting space 201. In some scenarios, the core inner housing 113 is inclined toward the side close to the first housing 111 (e.g., the first side wall 1112). This allows the core housing 11 to support the flexible embedded block 114 as much as possible through the core inner housing 113, reducing the design difficulty of the flexible embedded block 114 and the design difficulty of the core inner housing 113. In some scenarios, observed along the width direction Z, the portion of the core inner housing 113 close to the free end FE is inclined toward the side close to the first housing 111 (e.g., the first side wall 1112), which allows the core inner housing 113 to dispose the flexible embedded block 114 in a region corresponding to the free end FE as much as possible, without substantially increasing the thickness of the core inner housing 113 in the X direction.

The core inner housing 113 may include a top wall 1131 and a second side wall 1132. The top wall 1131 and the first housing 111 (e.g., the first side wall 1112) may be oppositely disposed. The second side wall 1132 is connected to the top wall 1131 and engages with the first housing 111, e.g., the first side wall 1112.

An antenna pattern, a touch pattern, and their respective metallized holes, etc., may be provided on the top wall 1131. In some embodiments, a sound pickup through-hole cooperating with the microphone 15 may be provided on the top wall 1131.

Observed along the width direction Z, and in the reference direction from the connecting end CE toward the free end FE, a portion of the second side wall 1132 close to the free end FE gradually moves away from the top wall 1131 in the thickness direction X. This causes the parting surface 203 to be inclined toward the side where the first housing 111 (e.g., the first side wall 1112) is located in the direction toward the free end FE, so as to cooperat with the first housing 111 (e.g., the first side wall 1112). Furthermore, a recess of the core inner housing 113 is also achieved.

The second side wall 1132 may include a first sub-side wall segment 1133, a second sub-side wall segment 1134 connected to the first sub-side wall segment 1133, and a third sub-side wall segment 1135 connected to the second sub-side wall segment 1134 and engaged with the first housing 111 (e.g., the first side wall 1112). The first sub-side wall segment 1133 is closer to the top wall 1131 than the second sub-side wall segment 1134 in the thickness direction X. The second sub-side wall segment 1134 is closer to the top wall 1131 than the third sub-side wall segment 1135 in the thickness direction X. The third sub-side wall segment 1135 protrudes outward from the core housing 11 compared to the second sub-side wall segment 1134. The second sub-side wall segment 1134 protrudes outward from the core housing 11 compared to the first sub-side wall segment 1133. In short, the second side wall 1132 may have a stepped structure, achieving the recess of the core inner housing 113. In some embodiments, at least one of the first sub-side wall segment 1133 and the second sub-side wall segment 1134 may be omitted.

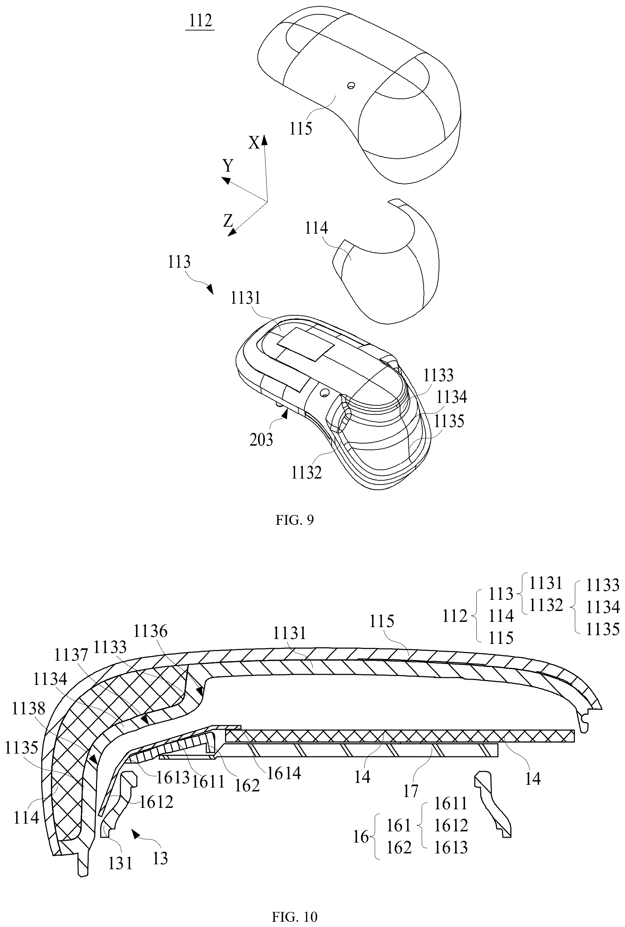

Referring to FIG. 10, FIG. 10 is a partial schematic structural diagram of the headphone in FIG. 6 according to some embodiments of the present disclosure. The first sub-side wall segment 1133 has a wall surface region 1136 that serves as an inner wall surface of the second side wall 1132. The second sub-side wall segment 1134 has a wall surface region 1137 that serves as an inner wall surface of the second side wall 1132. The third sub-side wall segment 1135 has a wall surface region 1138 that serves as an inner wall surface of the second side wall 1132. In some embodiments, the wall surface region 1137 may be referred to as a first wall surface region, and the wall surface region 1138 may be referred to as a second wall surface region. In some embodiments, the wall surface region 1136 may be referred to as a first wall surface region, and the wall surface region 1137 may be referred to as a second wall surface region. In some embodiments, the wall surface region 1136 may be referred to as a first wall surface region, and the wall surface region 1138 may be referred to as a second wall surface region. In some embodiments, when any two among the wall surface region 1136, the wall surface region 1137, and the wall surface region 1138 are formed on the second side wall 1132, the second side wall 1132 is not limited to being constituted by the first sub-side wall segment 1133, the second sub-side wall segment 1134, and the third sub-side wall segment 1135. The second side wall 1132 may also be formed by other structural forms. In some embodiments, any two among the wall surface region 1136, the wall surface region 1137, and the wall surface region 1138 formed by the second side wall 1132 are non-coplanar. In some embodiments, a degree of curvature of the wall surface region 1136 is less than a degree of curvature of the wall surface region 1137. In some embodiments, the degree of curvature of the wall surface region 1136 is greater than the degree of curvature of the wall surface region 1137. In some embodiments, the degree of curvature of the wall surface region 1137 is less than a degree of curvature of the wall surface region 1138. In some embodiments, the degree of curvature of the wall surface region 1136 is less than the degree of curvature of the wall surface region 1138.

In some embodiments, the first housing 111 and the core inner housing 113 may be an integral structure.

The hardness of the flexible embedded block 114 is less than the hardness of the first housing 111 and the hardness of the core inner housing 113, to improve the wearing comfort of the headphone 200. In some embodiments, a material of the flexible embedded block 114 may be silicone, rubber, or the like. The flexible embedded block 114 may be formed on a preset region of the core inner housing 113 by injection molding, and may even be disposed on a preset region of the first housing 111. In some embodiments, the flexible embedded block 114 may at least partially cover a region of the first housing 111 and/or the core inner housing 113 corresponding to the free end FE, such that the core module 10 is at least partially abutted against the cavum concha 102 through the flexible embedded block 114. In other words, a portion of the first housing 111 and/or the core inner housing 113 that extends into the cavum concha 102 and contacts the cavum concha 102 may be covered by the flexible embedded block 114. Thus, when the core module 10 is abutted against the cavum concha 102, e.g., when the core module 10 and the hook-shaped structure 20 are configured to jointly clamp the ear 100 from front and rear sides of a region of the ear 100 corresponding to the cavum concha 102, the flexible embedded block 114 serves as a buffer between the core housing 11 and the ear 100 to alleviate pressure exerted by the headphone 200 on the ear 100. This helps improve the comfort of the headphone 200 in the wearing state. In some embodiments, since the flexible embedded block 114 at least partially covers the region of the first housing 111 and/or the core inner housing 113 corresponding to the free end FE, the parting surface 203 between the core inner housing 113 and the first housing 111 (e.g., the first sidewall 1112) is inclined toward a side of the first housing 111 in a direction approaching the free end FE. This allows the flexible embedded block 114 to be disposed on the core inner housing 113 as much as possible, reducing the design difficulty of the core inner housing 113. In addition, the flexible embedded block 114, in cooperation with the recess of the core inner housing 113, more reasonably reduces the mounting space 201, fully utilizes various positions and spaces of the core housing 11, and enhances the appearance performance.

In some embodiments, the flexible embedded block 114 may continuously cover at least a portion of regions of the first housing 111 and/or the core inner housing 113 corresponding to the rear side surface RS, the upper side surface US, and the lower side surface LS.

In some embodiments, the flexible embedded block 114, in cooperation with the recess of the core inner housing 113, may achieve control over an area of an outer surface of the flexible embedded block 114. This ensures the area is not too small, thereby preventing deterioration in the wearing comfort of the core module 10 and deviation from the original purpose of arranging the flexible embedded block 114 (caused by insufficient contact area between the flexible embedded block 114 and the cavum concha 102). Meanwhile, it keeps the area from being too large, avoiding excessive volume of the core module 10.

In some implementations, observed along the thickness direction X, the flexible embedded block 114 may be arranged in a U-shape.

In some implementations, a portion of the flexible embedded block 114 corresponding to the lower side surface LS may abut against the antitragus 108. A thickness of the portion of the flexible embedded block 114 corresponding to the rear side surface RS may be less than a thickness of a portion of the flexible embedded block 114 corresponding to the upper side surface US and a thickness of a portion of the flexible embedded block 114 corresponding to the lower side surface LS, respectively. This ensures good comfort even when the core module 10 is abutted against an uneven position within the cavum concha 102.

In some implementations, the flexible embedded block 114 is entirely disposed on the region of the core inner housing 113 corresponding to the free end FE, to simplify the structure of the core module 10 and reduce processing costs.

In some embodiments, the flexible embedded block 114 is at least partially disposed on the second side wall 1132. Certainly, in addition to being disposed on the second side wall 1132, the flexible embedded block 114 may also be partially disposed on the top wall 1131.

In some embodiments, an outer surface of the flexible embedded block 114 may continuously transition to an outer surface of a region of the core inner housing 113 not covered by the flexible embedded block 114. This helps improve the appearance quality of the core module 10 and avoids a bumpy surface of the core module 10.

In some embodiments, due to the arrangement of the second side wall 1132, the flexible embedded block 114 may accumulate on the core inner housing 113 during an injection molding process, avoiding overflow. This facilitates better abutment of the core module 10 against the cavum concha 102 through the flexible embedded block 114, thereby improving comfort of the headphone 200 in the wearing state.

In some embodiments, the flexible embedded block 114 may be omitted.

A hardness of the flexible covering layer 115 is less than a hardness of the first housing 111 and is less than a hardness of the core inner housing 113, so as to improve the wearing comfort of the headphone 200. In some embodiments, the flexible covering layer 115 may be silicone, rubber, etc. The flexible covering layer 115 may be formed on a preset region of the first housing 111, the core inner housing 113, and/or the flexible embedded block 114 by injection molding, adhesive bonding, etc. In some embodiments, a thickness of the flexible covering layer 115 is less than a thickness of the core inner housing 113.

In some embodiments, the flexible covering layer 115 may integrally cover at least a portion of an outer surface of the flexible embedded block 114 and at least a portion of an outer surface of the first housing 111 and/or at least a portion of an outer surface of the core inner housing 113 not covered by the flexible embedded block 114. This helps enhance the appearance consistency of the core module 10.

In some embodiments, the hardness of the flexible covering layer 115 is greater than the hardness of the flexible embedded block 114, so as to allow sufficient softness of the flexible embedded block 114. In addition, the flexible covering layer 115 may also improve the comfort of the headphone 200 in the wearing state and has a certain structural strength to protect the flexible embedded block 114.

In some embodiments, the flexible covering layer 115 may be omitted.

It is understandable that, due to the configuration of the second side wall 1132, the free end FE is arranged in a tapered shape in a direction away from the connecting end CE.

Referring to FIG. 6 and FIG. 7, the speaker 12 may generate sound waves after being energized, and the sound waves may be transmitted out through the sound outlet hole 1101 to facilitate entry into the external auditory canal 101. The speaker 12 may be coupled to the main control circuit board 14 to allow operation under the control of the main control circuit board 14. In some embodiments, the speaker 12 may be adapted to be a bone conduction speaker based on bone conduction principles in electronic devices such as headphones, smart glasses, etc. A basic structure of the bone conduction speaker is well-known to those skilled in the art and will not be repeated here.

The speaker 12 may face the first housing 111, e.g., the bottom wall 1111. An axial direction of the speaker 12 may be the thickness direction X, or may, of course, be arranged to cross the thickness direction X.

The speaker 12 may be fixed to the first housing 111, e.g., the bottom wall 1111. Alternatively, the speaker 12 may be fixed to the first housing 111 with the cooperation of the sound chamber bracket 13. Certainly, the speaker 12 may also be fixed to the second housing 112.

The speaker 12 may partially overlap the second sub-side wall segment 1134 in the thickness direction X, to facilitate arrangement of a sufficiently large speaker 12 within the first housing 111, thereby enhancing the sound volume produced by the headphone 200, i.e., optimizing the arrangement and improving space utilization.

A space on a side of the speaker 12 facing away from the first housing 111 (e.g., the bottom wall 1111) may communicate with an external environment through an acoustic hole, which helps reduce the resistance of the diaphragm of the speaker 12 during vibration. In some embodiments, a space (e.g., the acoustic cavity 202) on a side of the speaker 12 facing away from the first housing 111 (e.g., the bottom wall 1111) may communicate with the external environment through the acoustic hole, which helps reduce the resistance of the diaphragm of the speaker 12 during vibration. That is, the acoustic cavity 202 may not be in communication with the sound outlet hole 1101.

Referring to FIG. 6, FIG. 7, and FIG. 11, FIG. 11 is a partial schematic structural diagram of a sound chamber bracket in FIG. 6 according to some embodiments of the present disclosure. The sound chamber bracket 13 and the speaker 12 may cooperatively form the acoustic cavity 202, so that the acoustic cavity 202 is separated from other structures in the first housing 111 (e.g., the main control circuit board 14, etc.). This is beneficial for improving the acoustic performance of the core module 10. In addition, the acoustic cavity 202 may not be in communication with the sound outlet hole 1101.

The sound chamber bracket 13 is connected, or even sealingly connected, to the first housing 111. In some embodiments, the sound chamber bracket 13 may be provided with an acoustic channel 1301 that communicates with an acoustic hole and the acoustic cavity 202, so that the acoustic cavity 202 is in communication with the external environment.

The sound chamber bracket 13 may include an annular main portion 131 and an abutting portion 132 connected to the annular main portion 131. The annular main portion 131 is sleeved around the periphery of the speaker 12 to form the acoustic cavity 202. The acoustic channel 1301 may extend through the abutting portion 132 and the annular main portion 131. The annular main portion 131 may be connected to the first housing 111. Because the sound chamber bracket 13 is annularly arranged, a side of the speaker 12 facing the main control circuit board 14 is exposed. This is beneficial for reducing the thickness of the core module 10 in the thickness direction X.

In some embodiments, the abutting portion 132 is located between the annular main portion 131 and the first housing 111, and surrounds at least a part of the acoustic hole. Correspondingly, the abutting portion 132 and the acoustic hole are arranged in a one-to-one correspondence.

In some embodiments, the sound chamber bracket 13 may be omitted.

Referring to FIG. 6, FIG. 7, and FIG. 12, FIG. 12 is a partial schematic structural diagram of the headphone in FIG. 6 according to some embodiments of the present disclosure. The main control circuit board 14 may be connected to the core inner housing 113, e.g., fixed to heat-staked posts connected to the top wall 1131. The main control circuit board 14 may partially overlap the first side wall 1132 (e.g., the first sub-side wall segment 1133) in the thickness direction X. The main control circuit board 14 may even partially overlap the second sub-side wall segment 1134. This facilitates the arrangement of a sufficiently large speaker 12 in the core housing 11, thereby enhancing the sound volume produced by the headphone 200. That is, the arrangement is optimized to improve space utilization. In some embodiments, the main control circuit board 14 may not overlap the first side wall 1132 in the thickness direction X.

In some embodiments, the thickness direction of the main control circuit board 14 may be the thickness direction X. Alternatively, the thickness direction of the main control circuit board 14 may be arranged to intersect the thickness direction X.

Because the main control circuit board 14 is arranged in the core housing 11, for example, the main control circuit board 14 is connected to the core inner housing 113 (e.g., the main control circuit board 14 is connected to the top wall 1131), the main control circuit board 14 may be electrically connected to the antenna pattern and the touch pattern through an elastic metal member 41 such as a pogo pin or a metal spring plate.

In some embodiments, the main control circuit board 14 may be located on a side of the speaker 12 close to the core inner housing 113. In some embodiments, the main control circuit board 14 and the speaker 12 may be stacked in the thickness direction of the main control circuit board 14 or in the axial direction of the speaker 12. In some embodiments, along the axial direction of the speaker 12, the main control circuit board 14 may overlap a portion of the speaker 12 or a portion of the sound chamber bracket 13 close to the connecting end CE, so as to optimize the arrangement and improve space utilization.

In some embodiments, a reinforcement plate 17 may be arranged between the main control circuit board 14 and the speaker 12. In some embodiments, the reinforcement plate 17 may also serve as a portion of the core module 10. The reinforcement plate 17 may facilitate spacing the main control circuit board 14 apart from the speaker 12, thereby reducing the influence of the speaker 12 on the main control circuit board 14. In some embodiments, the reinforcement plate 17 may also be fixedly connected to the main control circuit board 14 to play a role in fixing the main control circuit board 14. In some embodiments, the reinforcement plate 17 may also space the main control circuit board 14 apart from the sound chamber bracket 13, thereby reducing the influence of the sound chamber bracket 13 on the main control circuit board 14. In some embodiments, the reinforcement plate 17 may also be arranged on a side of the sound chamber bracket 13 close to the main control circuit board 14. In some embodiments, the reinforcement plate 17 may be attached to the main control circuit board 14, thereby improving the fixing effect and reducing assembly difficulty.

Referring to FIG. 6, the microphone 15 may be directly soldered onto the main control circuit board 14, and may be located on a side of the main control circuit board 14 close to the core inner housing 113 (e.g., the top wall 1131), so as to pick up speech and environmental sounds through the sound pickup through-hole. In some embodiments, the main control circuit board 14 may press the microphone 15 against the core inner housing 113 (e.g., the top wall 1131). In some embodiments, the microphone 15 may be omitted.

Optionally, referring to FIG. 6, FIG. 10, and FIG. 12, the sensor 16 may be configured to detect whether a user is wearing the headphone 200 and generate a corresponding electric signal, thereby allowing a control structure of the headphone 200 (e.g., the main control circuit board 14) to implement a preset function (e.g., wearing detection). Preferably, in some embodiments, the sensor 16 may include a capacitive sensor. The working principle and specific structure of the capacitive sensor are well known to those skilled in the art and will not be repeated here.

Optionally, in some embodiments, a single headphone 200 is worn, and the sensor 16 provided on the single headphone 200 is triggered to generate an electric signal, thereby allowing a control structure of the single headphone 200 (e.g., the main control circuit board 14) to generate a corresponding control instruction based on the electric signal. Alternatively, a single headphone 200 is worn, and a plurality of sensors 16 provided on the single headphone 200 are triggered to generate a plurality of electric signals, thereby allowing a control structure of the single headphone 200 (e.g., the main control circuit board 14) to perform a differential operation on the plurality of electric signals and further generate a corresponding control instruction.

Optionally, in some embodiments, at least two headphones 200 are worn, and sensors 16 provided on the at least two headphones 200 are respectively triggered to generate a plurality of electric signals, thereby allowing control structures of the at least two headphones 200 (e.g., the main control circuit board 14) to perform the differential operation on the plurality of electric signals and further generate a corresponding control instruction.

Specifically, a control structure of the headphone 200 (e.g., the main control circuit board 14) transmits the electric signal to a mobile terminal (e.g., a mobile phone, an MP3 player, etc.) communicatively connected to the headphone 200. The mobile terminal generates a corresponding control instruction based on the electric signal. That is, the electric signal may allow the mobile terminal to implement a preset function (e.g., wearing detection).

Optionally, in some embodiments, the sensor 16 may be arranged in a region of the core housing 11 close to the skin of the ear 100, so as to allow the sensor 16 to be triggered in the wearing state. Specifically, the sensor 16 may be fixed at a preset position by means of an adhesive such as double-sided tape or glue. Alternatively, the sensor 16 may be formed at the preset position by a laser direct structuring technology. The preset position may be a position in the core housing 11.

Optionally, in some embodiments, the sensor 16 may include a capacitor electrode plate 161 electrically connected to the main control circuit board 14 and an electrode plate bracket 162 supporting the capacitor electrode plate 161. Specifically, the sensor 16 may generate the electric signal through the capacitor electrode plate 161; that is, the sensor 16 may perform wearing state detection through the capacitor electrode plate 161. The electrode plate bracket 162 may maintain the capacitor electrode plate 161 in a specific shape while supporting the capacitor electrode plate 161. The electrode plate bracket 162 may also make the capacitor electrode plate 161 as close as possible to the skin region of the ear 100, thereby improving the accuracy of wearing state detection.

Preferably, in some embodiments, the capacitor electrode plate 161 may be integrally formed from a plate or a sheet, so as to facilitate processing. Therefore, the thickness of the capacitor electrode plate 161 may be negligible. Correspondingly, the surface area on a side of the capacitor electrode plate 161 in the thickness direction may be considered as the area of the capacitor electrode plate 161.

Optionally, in some embodiments, in the wearing state, the free end FE of the core module 10 extends into the cavum concha 102, that is, the free end FE contacts or is close to the skin during wearing. Therefore, the capacitor electrode plate 161 may be arranged in the core housing 11 and near the free end FE, and cooperate with the skin region to perform the wearing state detection. This arrangement may make the capacitor electrode plate 161 close to the skin region, thereby improving the accuracy of detection and reducing the possibility of false detection. Of course, in other embodiments, the capacitor electrode plate 161 may also be arranged at other positions in the core housing 11 that may cooperate with the skin region, if conditions permit. It is understandable that, due to the influence of the wearing manner, the region where the core module 10 cooperates with the skin region also varies. However, the capacitor electrode plate 161 should be arranged as close as possible to the skin region to improve the accuracy of detection.

Preferably, in some embodiments, the capacitor electrode plate 161 may be arranged between the speaker 12 and the free end FE, thereby fully utilizing the gap between the speaker 12 and the free end FE to achieve the purpose of optimizing the arrangement and improving space utilization. Furthermore, the capacitor electrode plate 161 may also be made close to the skin region to cooperate with the skin region. In some embodiments, the capacitor electrode plate 161 may at least partially overlap the speaker 12 along the axial direction of the speaker 12. In some embodiments, along the axial direction of the speaker 12, the capacitor electrode plate 161 may overlap a portion of the speaker 12 close to the free end FE, so as to optimize the arrangement and improve space utilization.

Optionally, in some embodiments, the capacitor electrode plate 161 may extend from a gap between structures in the core housing 11 toward a side of the core inner housing 113 (e.g., the top wall 1131). The capacitor electrode plate 161 may extend to a position where it is electrically connected to the main control circuit board 14, thereby implementing the detection function of the capacitor electrode plate 161.

Optionally, in some embodiments, the capacitor electrode plate 161 may include a first main portion 1611, a second main portion 1612 spaced apart from the first main portion 1611, a first connecting portion 1613 connecting the first main portion 1611 and the second main portion 1612 in a spaced region 1601 between the first main portion 1611 and the second main portion 1612, and a second connecting portion 1614 connecting the first main portion 1611 to the main control circuit board 14. The capacitor electrode plate 161 may be bent arbitrarily at least with the cooperation of the first connecting portion 1613, to better match the shape of the mounting space 201 in the core housing 11. This allows the capacitor electrode plate 161 to be arranged with a large area within the limited space of the mounting space 201, thereby improving the accuracy of the wearing state detection. Specifically, cooperation of the first main portion 1611, the second main portion 1612, the first connecting portion 1613, and the second connecting portion 1614 enhances the adaptability of the capacitor electrode plate 161 within a small space. This facilitates better arrangement of the capacitor electrode plate 161 within gaps between structures in the core housing 11. The capacitor electrode plate 161 is facilitated to spread out as much as possible within the core housing 11, thereby improving the accuracy of the wearing state detection through an increased area. In addition, the capacitor electrode plate 161 may be more easily integrally formed to present a complete structure. The first main portion 1611 and the second main portion 1612 may serve as extended branches to extend into different gaps, spreading out as much as possible to increase the area. It should be understood that when the area is increased, the detection accuracy of the wearing state may be improved. Consequently, the capacitor electrode plate 161 may appropriately increase the distance over which the capacitor electrode plate 161 may cooperate with a skin region while ensuring the accuracy of the wearing state detection. When the distance is increased, wearing manners may be more diversified, making the headphone 200 more suitable for different ears 100. This reduces detection errors of the wearing state caused by differences among various ears 100, expands usage scenarios of the headphone 200, and improves adaptability of the headphone 200.

Preferably, in some embodiments, the area of the capacitor electrode plate 161 may be set to be in a range of 35 mm² to 50 mm² to ensure that the capacitor electrode plate 161 has sufficient capability to perform wearing detection. Moreover, it is precisely the unique structural design of the capacitor electrode plate 161 that allows the area of the capacitor electrode plate 161 to be designed larger.

Preferably, referring to FIG. 6 and FIG. 10, the first main portion 1611 may be located outside the main control circuit board 14, i.e., on one side of the main control circuit board 14. This reduces the occupation of space where the main control circuit board 14 is located, and may also reduce the electromagnetic influence of the main control circuit board 14 on the first main portion 1611. Optionally, in some embodiments, the first main portion 1611 may be located on one side of the main control circuit board 14 in a direction perpendicular to the thickness of the main control circuit board 14, to optimize the arrangement manner and improve space utilization. Optionally, in some embodiments, the first main portion 1611 may be located on a side of the main control circuit board 14 close to the second side wall 1132, to facilitate layout optimization of the capacitor electrode plate 161 and improve space utilization. Furthermore, the second side wall 1132 is relatively close to the free end FE, thereby making the first main portion 1611 close to the skin region. Optionally, in some embodiments, the first main portion 1611 may be disposed adjacent to the second side wall 1132 (e.g., the first sub-side wall segment 1133 or the second sub-side wall segment 1134), that is, the first main portion 1611 may be disposed adjacent to the wall surface region 1136 or the wall surface region 1137. Thus, when a wall surface region with a small degree of curvature is selected, the structural stability of the capacitor electrode plate 161 may be improved. Simultaneously, the first main portion 1611 may be facilitated to spread out as much as possible, increasing an area for cooperation with the skin region and improving the accuracy of the wearing state detection. A distance over which the first main portion 1611 can cooperate with the skin region may also be appropriately increased, making wearing manners more diversified, expanding usage scenarios of the headphone 200, and improving adaptability of the headphone 200. Optionally, in some embodiments, the first main portion 1611 may be attached or electroplated on the second side wall 1132 (e.g., the second sub-side wall segment 1134) to be close to the skin region. That is, the first main portion 1611 may be attached on the wall surface region 1136 or the wall surface region 1137. Optionally, in some embodiments, the first main portion 1611 may be fixedly attached to the second sub-side wall segment 1134, e.g., the wall surface region 1137, to improve the fixing effect and reduce assembly difficulty. It should be understood that the attachment manner may be performed by means of adhesion or electroplating.

Preferably, referring to FIG. 6 and FIG. 10, in some embodiments, the second main portion 1612 may be located outside the main control circuit board 14, i.e., on one side of the main control circuit board 14. This reduces the occupation of space where the main control circuit board 14 is located, and may also reduce the electromagnetic influence of the main control circuit board 14 on the second main portion 1612. Optionally, in some embodiments, the second main portion 1612 may be located on one side of the main control circuit board 14 in the direction perpendicular to the thickness of the main control circuit board 14, to optimize the arrangement manner and improve space utilization. Optionally, in some embodiments, the second main portion 1612 may be located on a side of the sound chamber bracket 13 (e.g., the annular main portion 131) close to the second side wall 1132, so as to facilitate layout optimization of the capacitor electrode plate 161 and improve space utilization. The second side wall 1132 is relatively close to the free end FE, thereby making the second main portion 1612 close to the skin region. Optionally, in some embodiments, the second main portion 1612 may be closer to the first housing 111 (e.g., the bottom wall 1111) than the first main portion 1611. Optionally, in some embodiments, the second main portion 1612 may be disposed adjacent to the second side wall 1132 (e.g., the second sub-side wall segment 1134 or the third sub-side wall segment 1135) to improve detection sensitivity. That is, the second main portion 1612 may be disposed adjacent to the wall surface region 1137 or the wall surface region 1138. The second main portion 1612 may cooperate with a wall surface region having a small degree of curvature, to improve the structural stability of the capacitor electrode plate 161. Simultaneously, the second main portion 1612 may be facilitated to spread out as much as possible, increasing the area for cooperation with the skin region and improving the accuracy of the wearing state detection. A distance over which the second main portion 1612 can cooperate with the skin region may also be appropriately increased, making wearing manners more diversified, expanding usage scenarios of the headphone 200, and improving adaptability of the headphone 200. Optionally, in some embodiments, the second main portion 1612 may be attached or electroplated on the second side wall 1132 (e.g., the third sub-side wall segment 1135). That is, the second main portion 1612 may be attached to the wall surface region 1137 or the wall surface region 1138. Optionally, in some embodiments, the second main portion 1612 may be fixedly attached to the third sub-side wall segment 1135 (e.g., the wall surface region 1138) to improve the fixing effect and reduce assembly difficulty. Optionally, in some embodiments, the second main portion 1612 may be lapped on the sound chamber bracket 13 (e.g., the annular main portion 131), utilizing the sound chamber bracket 13 for support. Optionally, in some embodiments, the second main portion 1612 may be attached to the sound chamber bracket 13 (e.g., the annular main portion 131). Optionally, in some embodiments, the second main portion 1612 may be abutted against the second side wall 1132 (e.g., the second sub-side wall segment 1134 or the third sub-side wall segment 1135) under abutment of the sound chamber bracket 13 (e.g., under abutment of the annular main portion 131). This improves the accuracy of wearing detection. Furthermore, assembly difficulty and assembly cost may be reduced, as there is no need to fix the second main portion 1612 through other structures or adhesive. Optionally, in some embodiments, at least a portion of the second main portion 1612 may maintain a clearance fit with the second side wall 1132 (e.g., the second sub-side wall segment 1134 or the third sub-side wall segment 1135). Selecting a wall surface region with a large degree of curvature for the clearance fit may reduce the assembly difficulty of the capacitor electrode plate 161. Simultaneously, a degree of curvature of the second main portion 1612 may be reduced, increasing a spread-out area of the second main portion 1612 and improving the detection accuracy of the wearing state. Consequently, the second main portion 1612 may appropriately increase the distance over which the second main portion 1612 can cooperate with the skin region while ensuring the accuracy of the wearing state detection. This makes wearing manners more diversified, making the headphone 200 more suitable for different ears 100, to reduce detection errors of the wearing state caused by differences among various ears 100, expand usage scenarios of the headphone 200, and improve adaptability of the headphone 200.

Optionally, in some embodiments, the first connecting portion 1613 may be located within the spaced region 1601, serving to connect the first main portion 1611 and the second main portion 1612. The first connecting portion 1613 may be bent relative to at least one of the first main portion 1611 and the second main portion 1612, such that the first main portion 1611 and the second main portion 1612 are non-coplanar. This allows the first main portion 1611 and the second main portion 1612 to match the limited space of the installation space 201, and better adapt to the gaps between structures within the core housing 11. Furthermore, in some embodiments, the first connecting portion 1613 may be located outside the main control circuit board 14; that is, the first connecting portion 1613 may be located on one side of the main control circuit board 14, so as to reduce the occupation of space where the main control circuit board 14 is located.

Optionally, in some embodiments, the area of the first connecting portion 1613 is smaller than the area of the first main portion 1611 and also smaller than the area of the second main portion 1612. This may make the first connecting portion 1613 easier to bend, so that the first main portion 1611 and/or the second main portion 1612 may spread out as much as possible, increasing the area and enabling extension and bending into different gaps. While ensuring the integrity of the capacitor electrode plate 161, space within the core housing 11 is utilized more vigorously, improving adaptability. In some embodiments, the area of the first connecting portion 1613 is smaller than the area of the first main portion 1611 and also smaller than the area of the second main portion 1612.

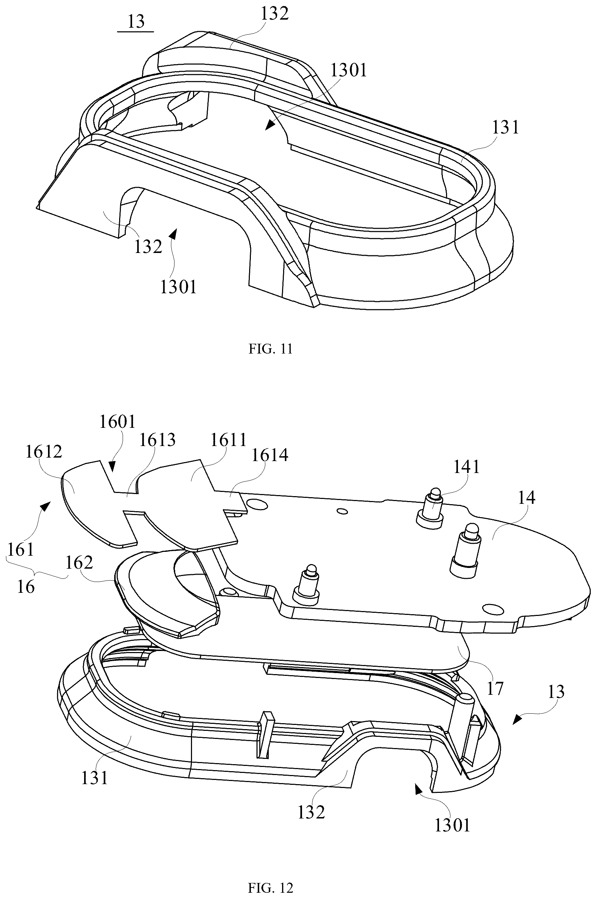

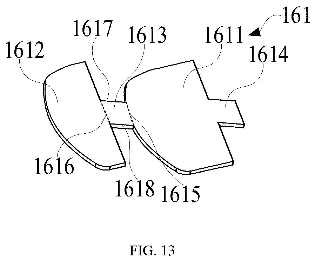

Preferably, referring to FIG. 13, FIG. 13 is a schematic structural diagram of a capacitor electrode plate in FIG. 12 according to some embodiments of the present disclosure. The first connecting portion 1613 may have a quasi-rectangular or rectangular structure. The first connecting portion 1613 may have a first side 1615, a third side 1617, a second side 1616, and a fourth side 1618 sequentially connected end to end. The first side 1615 and the second side 1616 are oppositely disposed. The third side 1617 and the fourth side 1618 are oppositely disposed. The first side 1615 is connected to the first main portion 1611. The second side 1616 is connected to the second main portion 1612. A length of the first side 1615 and a length of the second side 1616 are both less than a length of the third side 1617 and both less than a length of the fourth side 1618. Lengths of long sides (i.e., the third side 1617 and the fourth side 1618) of the first connecting portion 1613 are greater than lengths of short sides (i.e., the first side 1615 and the second side 1616). This further facilitates the first main portion 1611 and/or the second main portion 1612 to extend, bend, and extend into different gaps as much as possible.

Preferably, in some embodiments, the first connecting portion 1613 may include at least two sub-connecting portions. The at least two sub-connecting portions may be arranged side by side, and each sub-connecting portion may be respectively connected to the first main portion 1611 and the second main portion 1612, so as to improve relative stability between the first main portion 1611 and the second main portion 1612.

Preferably, in some embodiments, the first connecting portion 1613 may extend from a portion connected to the first main portion 1611 to a portion connected to the second main portion 1612. In an extension direction, a distance between the two long sides may first gradually decrease and then gradually increase, so as to improve the bending capability of the first connecting portion 1613 and the adaptation capability within the headphone 200.

Preferably, in some embodiments, the first connecting portion 1613 may be bent such that the first main portion 1611 is disposed adjacent to the wall surface region 1137, and the second main portion 1612 is disposed adjacent to the wall surface region 1138. Simultaneously, the first connecting portion 1613 may be fully utilized to increase the area for cooperation with the skin region.

Optionally, in some embodiments, the second connecting portion 1614 may be bent relative to the first main portion 1611, so that the second connecting portion 1614 may extend to a position cooperating with the main control circuit board 14, and thereby be electrically connected to the main control circuit board 14. This allows the capacitor electrode plate 161 to be electrically connected to the main control circuit board 14, facilitating layout optimization of the capacitor electrode plate 161 and the main control circuit board 14 and improving space utilization. Certainly, when the first main portion 1611 is directly or through other structures electrically connected to the main control circuit board 14, the second connecting portion 1614 may be omitted.

Optionally, in some embodiments, the second connecting portion 1614 may be farther from the free end FE than the first connecting portion 1613. Furthermore, in some embodiments, an area of the second connecting portion 1614 is smaller than the area of the first connecting portion 1613, so that when disposed within the free end FE, the second connecting portion 1614 is easier to adapt to the cavum concha 102 and is more conducive to the spatial arrangement of the capacitor electrode plate 161.

Optionally, in some embodiments, the second connecting portion 1614 may be electrically connected to the main control circuit board 14 on a side of the main control circuit board 14 facing away from the sound chamber bracket 13, e.g., the annular main portion 131.

Optionally, in some embodiments, the first main portion 1611 may be bent at least, so as to be better arranged with a large area within the limited space of the mounting space 201. The first main portion 1611 may be bent to better utilize gaps between various structures within the mounting space 201, fully utilizing the space within the mounting space 201. Furthermore, in some embodiments, a middle portion of the first main portion 1611 and the free end FE may be oppositely disposed. At least one end of the first main portion 1611 may be bent toward a side close to the connecting end CE in a direction perpendicular to the thickness of the main control circuit board 14, so as to match the curvature of an inner surface of the second side wall 1132, implementing a large-area arrangement of the first main portion 1611. Furthermore, in some embodiments, at least one end of the first main portion 1611 may be bent, extending into gaps between different structures, spreading out the area as much as possible.

Optionally, in some embodiments, the second main portion 1612 may be bent at least, so as to be better arranged with a large area within the limited space of the mounting space 201. The second main portion 1612 may be bent to better utilize gaps between various structures within the mounting space 201, fully utilizing the space within the mounting space 201. Furthermore, in some embodiments, a middle portion of the second main portion 1612 and the free end FE may be oppositely disposed. At least one end of the second main portion 1612 may be bent toward a side close to the connecting end CE in a direction perpendicular to the thickness of the main control circuit board 14, to match the curvature of an inner surface of the second side wall 1132, implementing a large-area arrangement of the second main portion 1612. Furthermore, in some embodiments, at least one end of the second main portion 1612 may be bent, extending into the gaps between different structures, spreading out the area as much as possible.

Optionally, in some embodiments, the electrode plate bracket 162 is configured to support the capacitor electrode plate 161 (e.g., the first main portion 1611), such that the first main portion 1611 cooperates with the second side wall 1132. In some embodiments, one end of the electrode plate bracket 162 is relatively fixed to the main control circuit board 14, and the other end of the electrode plate bracket is relatively fixed to the sound chamber bracket 13 (e.g., the annular main portion 131), so as to restrict extension of the capacitor electrode plate 161. Further, in some embodiments, one end of the electrode plate bracket 162 may be supported on the reinforcement plate 17 to be relatively fixed to the main control circuit board 14. Further, in some embodiments, the first main portion 1611 is abutted against the second side wall 1132 (e.g., the second sub-side wall segment 1134 or the first sub-side wall segment 1133) under abutment of the electrode plate bracket 162, so as to improve the accuracy of the wearing state detection. Furthermore, assembly difficulty and cost are reduced, and no additional structure or adhesive is required to fix the first main portion 1611. Further, in some embodiments, the electrode plate bracket 162 may be a portion of the sound chamber bracket 13. Alternatively, in some embodiments, the electrode plate bracket 162 may be a portion of the reinforcement plate 17.

It should be understood that the above description of the sensor 16 is not exhaustive of the present application. The sensor 16 may also be disposed between the flexible embedded block 114 and the core inner housing 113 (and/or the flexible covering layer 115), or between the flexible covering layer 115 and the core inner housing 113 (and/or the first housing 111). The sensor 16 may extend to the core housing 11 and be electrically connected to the main control circuit board 14, or be electrically connected to the main control circuit board 14 through a circuit trace.

In the several embodiments provided in the present disclosure, it should be understood that the disclosed method and device may be implemented in other manners. For example, the device embodiments described above are merely illustrative. For example, the division of modules or units is merely a logical function division. In actual implementation, there may be other division manners. For example, a plurality of units or components may be combined or integrated into another system, or some features may be omitted or not executed.

Units described as separate components may or may not be physically separate. Components shown as units may or may not be physical units, i.e., may be located in one place, or may be distributed over a plurality of network units. Some or all of the units may be selected according to actual needs to achieve the objectives of the embodiments.

In addition, functional units in the various embodiments of the present disclosure may be integrated into one processing unit, or each unit may exist alone physically, or two or more units may be integrated into one unit. The integrated unit may be implemented in the form of hardware, or in the form of a software functional unit.

The foregoing descriptions are merely specific embodiments of the present application, and are not intended to limit the patent scope of the present application. Equivalent structures or equivalent process transformations made based on the content of the specification and drawings of the present application, or direct or indirect applications in other related technical fields, are similarly included in the patent protection scope of the present application.

## Claims

1. A headphone, comprising: a main control circuit board and a capacitor electrode plate, wherein
the capacitor electrode plate is disposed in a region of the headphone that is close to a user's skin in a wearing state of the headphone, and is configured to generate an electric signal based on whether the user wears the headphone, wherein
the capacitor electrode plate includes:
a first main portion electrically connected to the main control circuit board;
a second main portion spaced apart from the first main portion; and
a first connecting portion connecting the first main portion and the second main portion in a spaced region between the first main portion and the second main portion, wherein
an area of the first connecting portion is smaller than an area of the first main portion and an area of the second main portion, and
the first connecting portion is bent relative to at least one of the first main portion and the second main portion, such that the first main portion and the second main portion are non-coplanar.

2. The headphone according to claim 1, wherein the capacitor electrode plate further comprises:
a second connecting portion connected to the first main portion, wherein
an area of the second connecting portion is smaller than the area of the first main portion and smaller than the area of the second main portion, and
the first main portion, the second main portion, and the first connecting portion are located outside the main control circuit board and are electrically connected to the main control circuit board through the second connecting portion.

3. The headphone according to claim 2, wherein the first main portion, the second main portion, the first connecting portion, and the second connecting portion are integrally formed from a plate or a sheet.

4. The headphone according to claim 2, wherein the second connecting portion is bent relative to the first main portion.

5. The headphone according to claim 1, wherein an area of the capacitor electrode plate is in a range of 35 mm² - 50 mm².

6. The headphone according to claim 1, further comprising:
a core housing; and
a hook-shaped structure connected to the core housing, wherein
the core housing has a connecting end connected to the hook-shaped structure and a free end not connected to the hook-shaped structure,
the core housing is located at a front side of an ear of the user in the wearing state of the headphone,
the free end extends into or covers a cavum concha,
at least a portion of the hook-shaped structure is located at a rear side of the ear in the wearing state of the headphone, and
the capacitor electrode plate is disposed inside the core housing and close to the free end.

7. The headphone according to claim 6, wherein
the free end is arranged in a tapered shape in a direction away from the connecting end;
the capacitor electrode plate further includes a second connecting portion connected to the first main portion and is electrically connected to the main control circuit board through the second connecting portion;
the first connecting portion is closer to the free end than the second connecting portion; and
an area of the second connecting portion is smaller than the area of the first connecting portion.

8. The headphone according to claim 6, wherein
an inner wall surface of the free end has a first wall surface region and a second wall surface region that are non-coplanar; and
the first connecting portion is bent such that the first main portion is disposed adjacent to the first wall surface region, and the second main portion is disposed adjacent to the second wall surface region.

9. The headphone according to claim 8, wherein
a degree of curvature of the first wall surface region is less than a degree of curvature of the second wall surface region;
the first main portion is fixedly attached to the first wall surface region; and
at least a portion of the second main portion maintains a clearance fit with the second wall surface region.

10. The headphone according to claim 9, wherein the area of the first connecting portion is smaller than the area of the first main portion and smaller than the area of the second main portion.

11. The headphone according to claim 9, wherein the first connecting portion has a first side, a second side, a third side, and a fourth side sequentially connected end to end, wherein
the first side and the second side are oppositely disposed;
the third side and the fourth side are oppositely disposed;
the first side is connected to the first main portion;
the second side is connected to the second main portion; and
a length of the first side and a length of the second side are both less than a length of the third side and both less than a length of the fourth side.

12. The headphone according to claim 9, further comprising:
an electrode plate bracket configured to support the first main portion such that the first main portion is fixedly attached to the first wall surface region.

13. The headphone according to claim 6, further comprising:
a speaker disposed inside the core housing, wherein
along an axial direction of the speaker, the main control circuit board overlaps a portion of the speaker close to the connecting end, and
the capacitor electrode plate overlaps another portion of the speaker close to the free end.

14. The headphone according to claim 13, further comprising:
a sound chamber bracket disposed around a periphery of the speaker, wherein the second main portion is lapped on the sound chamber bracket.

15. The headphone according to claim 14, further comprising:
an electrode plate bracket configured to support the first main portion, wherein
one end of the electrode plate bracket is relatively fixed to the main control circuit board, and
the other end of the electrode plate bracket is relatively fixed to the sound chamber bracket.

16. The headphone according to claim 15, further comprising:
a reinforcement plate attached to the main control circuit board, wherein the one end of the electrode plate bracket is supported on the reinforcement plate, and the the other end of the electrode plate bracket is supported on the sound chamber bracket.
